# EUROPEAN PATENT SPECIFICATION

(11) **EP 3 072 755 B1**
(45) Date of publication and mention of the grant of the patent: **01.08.2018**
(21) Application number: 16161407.8
(22) Date of filing: 21.03.2016
(51) Int. Cl.: B60S 1/40

(54) **CONNECTOR ELEMENT FOR CONNECTING TOGETHER WINDSCREEN WIPER BLADES AND THEIR OPERATING ARMS**
VERBINDUNGSELEMENT ZUR VERBINDUNG VON SCHEIBENWISCHERBLÄTTERN MIT DEREN BETÄTIGUNGSARMEN
ÉLÉMENT DE RACCORD POUR RACCORDER ENSEMBLE DES LAMES D'ESSUIE-GLACE ET LEURS BRAS DE MANOEUVRE

(30) Priority: 24.03.2015 CN 201520168680 U
(43) Date of publication of application: 28.09.2016
(73) Proprietor: Cartix S.r.l., 20123 Milano (IT)
(72) Inventor: WU, Zhengzhu, 20123 Milano (IT)
(74) Representative: Raimondi, Margherita

(56) References cited:
- EP-A1- 2 813 403
- EP-A2- 2 813 404
- DE-A1-102010 062 940
- US-A1- 2012 110 773

## Description

The present invention relates to a connector element for connecting together windscreen wiper blades and their operating arms.

It is known, in the technical sector relating to the production and distribution of windscreen wipers for vehicles, the blades of which must be connected to associated operating arms which can be mounted on the vehicle, that said arms have ends formed with different shapes which result in the need for differently designed intermediate connectors with corresponding engaging elements, normally comprising a transverse pin, which is fixed to the blade and designed to allow engagement/disengagement for mounting/replacement of said blade.

A particular example of this situation consists of the arms known in the sector by the name of Top-Lock or Slim-Top depending on their width in the transverse direction.

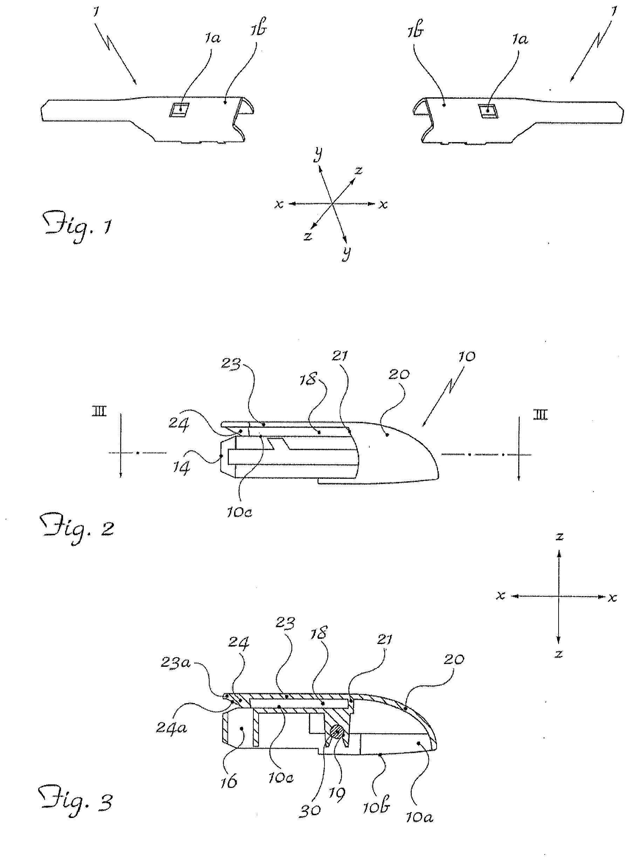

Apart from their size, these arms have an end for engagement with the blade which is configured with a section in the form of an "overturned U" and has an asymmetrical form for right-hand and left-hand arms; an example of these arms is schematically shown in Fig. 1 with the sole free end part 1b having a through-opening 1a in the vertical direction for joining together with the connector element.

Correspondingly, intermediate connectors for connecting together arm and blade are also known, these connectors, however, while performing their function, having the drawback that they are in turn asymmetrical and must therefore be produced, distributed and mounted by the user in pairs, with a consequent inevitable increase in the types, production moulds, storage facilities and final cost of the spare parts.

In addition, the known connectors have an element for engagement with the operating arm consisting of a resilient projection which, during assembly, is pushed downwards by the said arm and then snap-engages back upwards inside the corresponding hole 1b of the arm so as to ensure relative locking.

This means that the subsequent disengaging operation, before replacing the blade, is always difficult and requires the use of an auxiliary tool. US 2012 0110773 A discloses a connector element for top-lock and slim-top arms according to the preamble of claim 1.

The technical problem which is posed, therefore, is that of providing an intermediate connector element for connecting together the asymmetrical operating arms of windscreen wiper blades and the said blades, which is able to provide a solution to the problems of the prior art.

In connection with this problem it is also required that this connector element should have small dimensions, be easy and inexpensive to produce and assemble and be able to fitted/removed with ease by any user, including non-specialized users.

These results are obtained according to the present invention by a connector element for Top-Lock and/or Slim-Top operating arms of windscreen wiper blades according to the characteristic features of Claim 1.

Further details may be obtained from the following description of a non-limiting example of embodiment of the subject of the present invention, provided with reference to the accompanying drawings, in which:
Figure 1: shows a perspective view of the asymmetrical end part of an operating arm for windscreen wiper blades according to the prior art;
Figure 2: shows a side view of the connector element according to the present invention;
Figure 3: shows a cross-section along the plane indicated by III-III in Fig. 2;
Figure 4: shows a perspective view of the sequence for assembling a connector element on the operating arm;
Figure 5: shows the sequence for assembly according to Fig. 6 with parts cross-sectioned; and
Figure 6: shows a cross-section along a vertical plane of the connector element according to the invention mounted on the operating arm.

As shown in Fig. 1 and assuming solely for the sake of convenience of description and without a limiting meaning a set of three reference axes, i.e. in a longitudinal direction X-X, corresponding to the lengthwise dimension of the connector element; transverse direction Y-Y, corresponding to the widthwise dimension of the connector element; and vertical direction Z-Z, perpendicular to the other directions and corresponding to the heightwise dimension, as well as a distal front part, far from the operating arm, and a proximal rear part, close to the operating arm, the connector element according to the invention comprises essentially:
- a substantially parallelepiped body 10; preferably the front end 10a of the body 10 is connected to a rounded surface 20 with an outward convexity; the surface 20 extends from the bottom base 10b of the parallelepiped body to a height such that its top free end forms a vertical step 24 with respect to the upper surface 10c of the parallelepiped body 10.

Said free end of the surface 20 is prolonged in the longitudinal direction X-X by a tongue 23 extending in the longitudinal direction over a length substantially corresponding to that of the parallelepiped body 10.

An empty space 18 of predefined length in the longitudinal direction is therefore formed between the tongue 23 and the upper surface 10c of the parallelepiped body 10, said length being such as to position the means for relative engagement of the operating arm 1 and connector element described below in a longitudinal position corresponding in the vertical direction Z-Z.

Preferably, the tongue 23 has an end connected to the free end of the surface 20, which is thinner in the transverse direction than said upper free end of the surface 20.

Preferably, the tongue 23 has a rear free end which is larger in the transverse direction than said front end connected to the surface 20.

The tongue 23 has at its rear free end 23a a tooth 24 extending towards the body 10; preferably during conditions of non-use the tooth 24 is inserted inside an underlying open seat 16 of the body 10. Preferably the tooth 24 is formed in the manner of a wedge with its vertex 24a directed outwards. Preferably the rear free end 23a of the tongue 23 has two elements 25 extending symmetrically outwards in the transverse direction Y-Y for allowing the user to grip and operate the said tongue 23.

Preferably the tongue 23 has a suitable elasticity for allowing elastic deformation thereof in the vertical direction Z-Z for the purposes which will become clearer below.

The front surface 20 preferably has parts of its side walls projecting transversely from the parallelepiped body 10, and forming abutment surfaces that match the wiper arm front end. Preferably, the rear end of the body 10 forms a slanted surface, extending from a certain height in the vertical direction Z-Z on the rear-end face 14 of the body 10 to the upper surface 10c of the body, thereby forming, together with tooth 24, an aid far insertion of the wiper arm.

Preferable the body 10 side walls have respective extruded raised ribs, extending longitudinally and substantially vertically, for interfering with corresponding indentations of the wiper arm.

As shown in the cross-section of Fig. 3 the parallelepiped body 10 has, formed therein, a seat 19 suitable for engagement with a transverse pin 30 of a windscreen wiper blade (not shown).

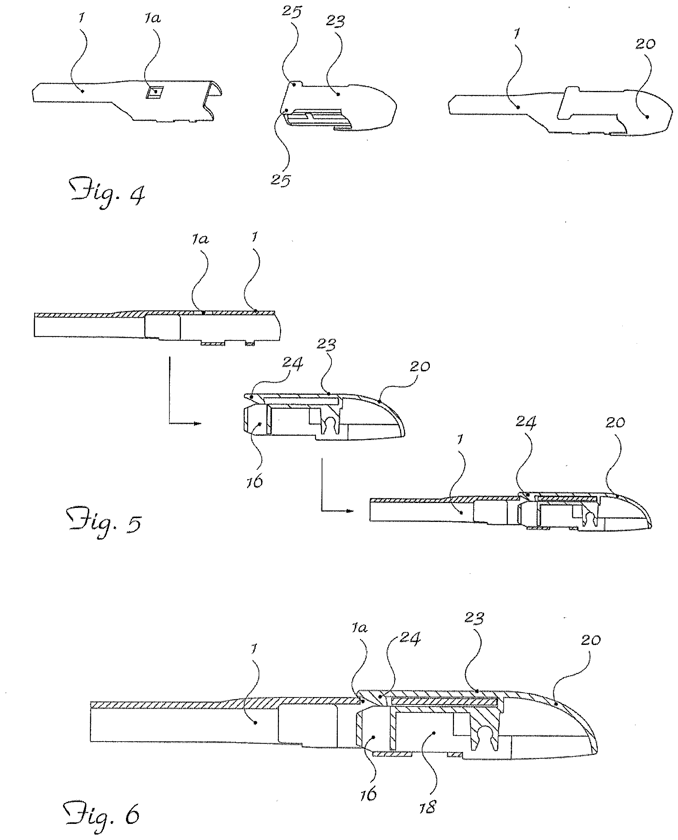

With the configuration described and as shown in Figs. 5, 6 and 7, assembly of the connector element on the operating arm 1, whether it be right-hand or left-hand, is carried out in the following sequence:
- the tongue 23 is raised in the vertical direction Z-Z so as to free the tooth 24 from the seat 16 of the body 10;
- the connector element and the free end 1b of the operating arm 1 are joined together in the longitudinal direction, by inserting said end into the empty space 18 comprised between the tongue 23 and the upper surface 10c of the body 10;

- insertion is continued until the free end of the arm reaches the end of its travel path and comes up against the step 21;
- the tongue 23 is released and, returning elastically towards the arm 1, inserts the tooth 24 inside the corresponding seat 1a of the said operating arm.

In order to replace the connector element and/or the entire blade the reverse sequence of operations is performed, i.e. lifting the tongue upwards in order to free the tooth 24 from the seat 1a of the arm 1 and extracting the latter in the longitudinal direction from the connector element.

According to the further preferred embodiments:
- the operations of gripping and raising the tongue 23 are favoured and facilitated by the transverse gripping lugs 25 present on its free end;
- the relative engagement during insertion of the operating arm inside the connector element is facilitated by the wedge-shaped form of the tooth 24 which avoids the need for manual lifting of the tongue 23.

It is therefore clear how the connector element according to the invention is symmetrical and suitable for mounting equally well on asymmetrical arms of the Top-Lock and/or Slim-Top type.

In addition, owing to the particular form with elastically deformable longitudinal tongue, the operation of inserting/extracting the connector element into/from the operating arm is particularly easy and straightforward.

Although described in connection with a number of embodiments and a number of preferred examples of embodiment of the invention, it is understood that the scope of protection of the present patent is defined solely by the claims below.

## Claims

1. Connector element for Top-Lock and Slim-Top operating arms (1,1a,1b) of windscreen wiper blades, comprising:
- a substantially parallelepiped body (10), the front end (10a) of which is connected to a surface (20) which extends from the bottom base (10b) of the parallelepiped body to a height such that its top free end forms a vertical step (24) with respect to the upper surface (10c) of the parallelepiped body (10), the connector being **characterised in that**
said free end is prolonged in the longitudinal direction (X-X) by a tongue (23) extending in the longitudinal direction over a length substantially corresponding to that of the parallelepiped body (10), an empty space (18) of predefined length in the longitudinal direction being formed between the tongue (23) and the upper surface (10c) of the parallelepiped body (10),
the tongue (23) has at its free end (23a) a tooth (24) extending towards the body (10) and suitable for engagement with a corresponding seat (1a) in the operating arm for relative locking once joined together.

2. Connector element according to Claim 1, **characterized in that** the tongue (23) has a suitable elasticity for allowing elastic deformation thereof in the vertical direction (Z-Z).

3. Connector element according to Claim 1 or 2, **characterized in that** the tooth (24) is formed in the manner of a wedge with its vertex (24a) directed towards the rear part of the connector.

4. Connector element according to any one of the preceding claims, **characterized in that** the free end (23a) of the tongue (23) has two elements (25) symmetrically extending outwards in the transverse direction (Y-Y).

5. Connector element according to any one of the preceding claims, **characterized in that** said body (10) has an open seat (16) at the rear end of the said body (10).

6. Connector element according to any one of the preceding claims, **characterized in that** the front surface (20) has parts of its side walls projecting transversely from the parallelepiped body (10), suitable to form abutment surfaces that match the wiper arm front end.

7. Connector element according to any one of the preceding claims, **characterized in that** the rear end of the body (10) forms a slanted surface, extending from a certain height in the vertical direction (Z-Z) on the rear-end face (14) of the body (10) to the upper surface (10c) of the body (10), thereby forming an aid far insertion of the wiper arm.

8. Connector element according to any one of the preceding claims, **characterized in that** the tongue (23) has an end connected to the free end of the rounded surface (20), which is thinner in the transverse direction than said upper free end of the rounded surface (20), and **in that** the tongue 23 has a rear free end (23a) which is larger in the transverse direction than said front end connected to the rounded surface (20).

9. Connector element according to any one of the preceding claims, **characterized in that** the body (10) side walls have respective extruded raised ribs, extending longitudinally and substantially vertically, for interfering with corresponding indentations of the wiper arm.

## Patentansprüche

1. Konnektorelement für Toplock- und Slim-Top-Betätigungsarme (1, 1a, 1b) von Scheibenwischerblättern, umfassend:
- einen im Wesentlichen parallelepipeden Körper (10), dessen vorderes Ende (10a) mit einer Fläche (20) verbunden ist, die sich von dem unteren Grundteil (10b) des parallelepipeden Körpers auf eine solche Höhe erstreckt, dass ihr oberes freies Ende bezüglich der oberen Fläche (10c) des parallelepipeden Körpers (10) eine vertikale Stufe (24) bildet, wobei der Konnektor
**dadurch gekennzeichnet ist, dass**
das freie Ende in der Längsrichtung (X-X) durch eine Zunge (23), die sich in der Längsrichtung über eine Länge erstreckt, die im Wesentlichen der des parallelepipeden Körpers (10) entspricht, verlängert ist, wobei ein leerer Raum (18) von vorab festgelegter Länge in der Längsrichtung zwischen der Zunge (23) und der oberen Fläche (10c) des parallelepipeden Körpers (10) ausgebildet ist,
die Zunge (23) an ihrem freien Ende (23a) einen Zahn (24) aufweist, der sich hin zu dem Körper (10) erstreckt und für Eingriff mit einem entsprechenden Sitz (1a) in dem Betätigungsarm zum relative Arretieren, sobald diese miteinander verbunden sind, geeignet ist.

2. Konnektorelement nach Anspruch 1, durch gekennzeichnet, dass die Zunge (23) eine geeignete Elastizität zum Zulassen von elastischer Verformung derselben in der vertikalen Richtung (Z-Z) aufweist.

3. Konnektorelement nach Anspruch 1 oder 2, durch gekennzeichnet, dass der Zahn (24) in der Art eines Keils ausgebildet ist, wobei sein Scheitel (24a) hin zu dem hinteren Teil des Konnektors gerichtet ist.

4. Konnektorelement nach einem der vorhergehenden Ansprüche, **dadurch gekennzeichnet, dass** das freie Ende (23a) der Zunge (23) zwei Elemente (25) aufweist, die sich in der Querrichtung (Y-Y) symmetrisch nach außen erstrecken.

5. Konnektorelement nach einem der vorhergehenden Ansprüche, **dadurch gekennzeichnet, dass** der Körper (10) an dem hinteren Ende des Körpers (10) einen offenen Sitz (16) aufweist.

6. Konnektorelement nach einem der vorhergehenden Ansprüche, **dadurch gekennzeichnet, dass** die vordere Fläche (20) mit Teilen ihrer Seitenwände von dem parallelepipeden Körper (10) quer vorspringt, welche geeignet sind, um Anschlagflächen zu bilden, die dem vorderen Ende des Wischerarms entsprechen.

7. Konnektorelement nach einem der vorhergehenden Ansprüche, **dadurch gekennzeichnet, dass** das hintere Ende des Körpers (10) eine geneigte Fläche bildet, die sich von einer bestimmten Höhe in der vertikalen Richtung (Z-Z) an der Hinterendseite (14) des Körpers (10) zur Oberseite (10c) des Körpers (10) erstreckt, wodurch eine Hilfe für Einführen des Wischerarms gebildet wird.

8. Konnektorelement nach einem der vorhergehenden Ansprüche, **dadurch gekennzeichnet, dass** die Zunge (23) ein mit dem freien Ende der gerundeten Fläche (20) verbundenes Ende aufweist, das in der Querrichtung dünner als das obere freie Ende der gerundeten Fläche (20) ist, und dass die Zunge (23) ein hinteres freies Ende (23a) aufweist, das in der Querrichtung größer als das mit der gerundeten Fläche (20) verbundene vordere Ende ist.

9. Konnektorelement nach einem der vorhergehenden Ansprüche, **dadurch gekennzeichnet, dass** die Seitenwände des Körpers (10) jeweilige extrudierte erhabene Rippen, die sich längs und im Wesentlichen vertikal erstrecken, zum Eingreifen mit entsprechenden Vertiefungen des Wischerarms aufweisen.

## Revendications

1. Élément connecteur de bras de mise en oeuvre (1, la, 1b) de type Top-Lock et Slim-Top de lames de balais d'essuie-glace de pare-brise, comprenant :
un corps (10) sensiblement parallélépipède, dont l'extrémité avant (10a) est liée à une surface (20) qui s'étend de la base inférieure (10b) du corps parallélépipède sur une hauteur telle que son extrémité libre supérieure forme un étage (24) vertical par rapport à la surface supérieure (10c) du corps (10) parallélépipède, le connecteur étant **caractérisé en ce que**
ladite extrémité libre est prolongée dans la direction longitudinale (X-X) par une languette (23) s'étendant dans la direction longitudinale sur une longueur correspondant sensiblement à celle du corps (10) parallélépipède, un espace vide (18) de longueur prédéfinie dans la direction longitudinale étant formé entre la languette (23) et la surface supérieure (10c) du corps (10) parallélépipède,
la languette (23) comporte, au niveau de son extrémité libre (23a), une dent (24) s'étendant en direction du corps (10) et appropriée pour coopérer avec un logement (1a) correspondant ménagé dans le bras de mise en oeuvre à des fins de verrouillage relatif une fois assemblés ensemble.

2. Élément connecteur selon la revendication 1, **caractérisé en ce que** la languette (23) a une élasticité appropriée pour lui permettre une déformation élastique dans la direction verticale (Z-Z).

3. Élément connecteur selon la revendication 1 ou 2, **caractérisé en ce que** la dent (24) est formée à la manière d'un coin, son sommet (24a) étant orienté en direction de la partie arrière du connecteur.

4. Élément connecteur selon l'une quelconque des revendications précédentes, **caractérisé en ce que** l'extrémité libre (23a) de la languette (23) comporte deux éléments (25) s'étendant de manière symétrique vers l'extérieur dans la direction transversale (Y-Y).

5. Élément connecteur selon l'une quelconque des revendications précédentes, **caractérisé en ce que** ledit corps (10) comporte un logement ouvert (16) au niveau de l'extrémité arrière dudit corps (10).

6. Élément connecteur selon l'une quelconque des revendications précédentes, **caractérisé en ce que** la surface avant (20) comporte des parties de ses parois latérales qui font saillie transversalement du corps parallélépipède (10), lesdites parties étant appropriées pour former des surfaces de butée qui correspondent à l'extrémité avant de bras d'essuie-glace.

7. Élément connecteur selon l'une quelconque des revendications précédentes, **caractérisé en ce que** l'extrémité arrière du corps (10) forme une surface inclinée s'étendant sur une certaine hauteur dans la direction verticale (Z-Z) de la face d'extrémité arrière (14) du corps (10) jusqu'à la surface supérieure (10c) du corps (10), formant ainsi une aide à l'introduction du bras d'essuie-glace.

8. Élément connecteur selon l'une quelconque des revendications précédentes, **caractérisé en ce que** la languette (23) comporte une extrémité liée à l'extrémité libre de la surface arrondie (20), qui est plus mince dans la direction transversale que ladite extrémité libre supérieure de la surface arrondie (20), et **en ce que** la languette (23) comporte une extrémité arrière libre (23a) qui est plus large dans la direction transversale que ladite extrémité avant liée à la surface arrondie (20).

9. Élément connecteur selon l'une quelconque des revendications précédentes, **caractérisé en ce que** les parois latérales de corps (10) comportent des nervures surélevées extrudées respectives s'étendant longitudinalement et sensiblement verticalement, destinées à interférer avec des renfoncements correspondants du bras d'essuie-glace.
